(19) Europäisches Patentamt
European Patent Office
Office européen des brevets

(11) Veröffentlichungsnummer : **0 187 949**
**B1**

(12) **EUROPÄISCHE PATENTSCHRIFT**

(45) Veröffentlichungstag der Patentschrift : **25.05.88**

(51) Int. Cl.⁴ : **C 08 G 65/00**, C 10 L 1/32

(21) Anmeldenummer : **85115639.8**

(22) Anmeldetag : **09.12.85**

(54) **Neue alkoxylierte Aminopolyether, Verfahren zu ihrer Herstellung und sie enthaltende Kohle-Wasser-Aufschlämmungen.**

(30) Priorität : **21.12.84 DE 3446921**

(43) Veröffentlichungstag der Anmeldung : **23.07.86 Patentblatt 86/30**

(45) Bekanntmachung des Hinweises auf die Patenterteilung : **25.05.88 Patentblatt 88/21**

(84) Benannte Vertragsstaaten : **BE DE FR GB**

(56) Entgegenhaltungen :
**EP-A- 0 025 998**
**EP-A- 0 057 576**
**DE-A- 2 937 224**
**US-A- 4 465 858**

(73) Patentinhaber : **BAYER AG**
**Konzernverwaltung RP Patentabteilung**
**D-5090 Leverkusen 1 Bayerwerk (DE)**

(72) Erfinder : **Mazanek, Jan, Dr.**
**Haferkamp 2**
**D-5000 Köln 80 (DE)**
Erfinder : **Müller, Hanns Peter, Dr.**
**Im Kerberich 6**
**D-5068 Odenthal (DE)**
Erfinder : **Nast, Roland, Dr.**
**Saarwerdenstrasse 47**
**D-4047 Dormagen 5 (DE)**
Erfinder : **Oberkirch, Wolfgang, Dr.**
**Gregor-Mendel-Strasse 8**
**D-5090 Leverkusen 1 (DE)**
Erfinder : **Richter, Franz-Moritz, Dr.**
**Holbeinweg 4**
**D-4047 Dormagen (DE)**
Erfinder : **Schäfer, Walter, Dr.**
**Wolfskaul 6**
**D-5000 Köln 80 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft neue alkoxylierte Aminopolyether, ein Verfahren zur ihrer Herstellung und sie enthaltende Kohle-Wasser-Aufschlämmungen.

Aufschlämmungen von feingemahlener Steinkohle in Wasser sind z. B. aus der US-PS 4 358 293, der US-PS 4 302 212, der JP-Patentanmeldung 58-125 787 und der JP-Patentanmeldung 57-145 190 bekannt. Sie lassen sich einerseits preisgünstig durch Pipelines transportieren, andererseits können sie in vorhandenen Verbrennungsanlagen direkt verbrannt werden. Die Koppelung des Transports mit der anschließenden Verbrennung ist besonders vorteilhaft. Die Kohle-Wasser-Aufschlämmungen können auch unmittelbar vor der Verbrennung hergestellt und dann verfeuert werden. Hierbei ist die sicherheitstechnisch problemlose Handhabung von Vorteil.

Bei der Herstellung von Kohle-Wasser-Aufschlämmungen stell man fest, daß die Viskosität der Aufschlämmungen ohne den Zusatz von Hilfsmitteln mit zunehmendem Feststoffgehalt überproportional ansteigt und die Aufschlämmung noch weit unter einer Kohlekonzentration, die eine Verwendung der Aufschlämmungen als Brennstoff zuläßt, fest wird.

Zur Verbesserung der Fließfähigkeit von Kohle-Wasser-Aufschlämmungen kann man verschiedene Maßnahmen ergreifen. Gemäß der US-PS 3 762 887 und der US-PS 4 282 006 führt eine bestimmte Verteilung der Teilchengrößen der eingesetzten Kohle zu einer Verbesserung des Fließverhaltens, gemäß der US-PS- 4 282 006 werden zusätzlich anionische grenzflächenaktive Verbindungen verwendet. Weiterhin ist die Verwendung von anionischen oder kationischen Tensiden, hochmolekularen Stoffen und Polyelektrolyten bei der Herstellung von wäßrigen Kohleaufschlämmungen bekannt (siehe US-PS 4 104 035, US-PS 4 304 572, US-PS 3 524 682, EP-OS 41 337, JP-OS 56-067 396 und JP-OS 56-088 495). Als grenzflächenaktive Substanzen für Kohle-Wasser-Aufschlämmungen werden in der US-PS 4 358 293 nicht-ionische Alkylenoxidcopolymere mit mindestens 100 Ethylenoxideinheiten beschrieben, wobei als Startermoleküle Alkylphenole, Propylenglykol oder Alkylendiamine verwendet werden. Die JP-OS 58-125 187 beschreibt verzweigte, nicht-ionische und stickstoffhaltige Alkylenpolyether, die US-PS 4 302 212 und die JP-OS 57-145 190 aus Hydroxylgruppen enthaltenden Startermolekülen aufgebaute Polyalkylenoxide.

Die bekannten oberflächenaktiven Substanzen sind jedoch für die technische Anwendung nicht befriedigend, da die so hergestellten wäßrigen Kohle-Aufschlämmungen, insbesondere bei höheren Feststoffgehalten, so hohe Viskositäten aufweisen, daß sie als fließfähige Gemische in der Technik nur mit Schwierigkeiten gehandhabt werden können.

Es wurden nun alkoxylierte Aminopolyether der Formel (I)

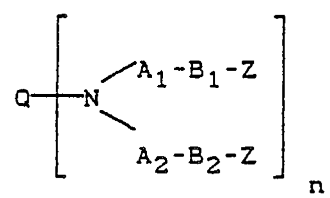

gefunden, in der

Q einen gegebenenfalls mehrwertigen Polyalkylenoxidrest bedeutet, der sich formal durch Abtrennung der endständigen Aminogruppen aus einem Aminopolyether ableitet und ein mittleres Molgewicht von 82 bis 30 000 besitzt,

$A_1$ und $A_2$ gleiche oder verschiedene Mono- oder Polyalkylenoxidreste der Art $(RO)_y$ bedeuten, wobei jedes R für einen Alkylenrest mit 2 bis 40 C-Atomen und y für eine ganze Zahl von 1 bis 200 stehen,

$B_1$ und $B_2$ gleiche oder verschiedene Mono- oder Polyalkylenoxidreste der Art $(R'O)_z$ bedeuten, wobei mindestens 50 % der R'-Reste für eine $-CH_2-CH_2$-Gruppe, die gegebenenfalls vorhandenen weiteren R'-Reste jeweils für einen Alkylenrest mit 3 bis 40 C-Atomen und z für eine ganze Zahl von 1 bis 300 stehen,

Z Wasserstoff,

$-NH-SO_3^{\ominus}M^{\oplus}$, $-SO_3^{\ominus}M^{\oplus}$, 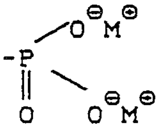

oder $-CH_2-COO^{\ominus}M^{\oplus}$

bedeutet, wobei $M^{\oplus}$ für ein Äquivalent eines Metallions oder für $NH_4^{\oplus}$ steht und

n eine ganze Zahl von 1 bis 30 bedeutet.

Bevorzugte alkoxylierte Aminopolyether der Formel (I) sind solche, bei denen unabhängig voneinander

Q der Rest eines auf Ethylenglykol, Propylenglykol, Trimethylolpropan, Glycerin, Pentaerythrit, Ethylendiamin oder Hexamethylendiamin gestarteten Polypropylenoxids, Polyethylen-polypropylenoxids, Polytetramethylenoxids oder Polytetramethylenoxid-polydecenoxids, jeweils mit einem mittleren Molgewicht von 82 bis 7000, bedeutet,

$A_1$ und $A_2$ gleiche oder verschiedene Mono- oder Polyalkylenoxidreste der Art $(RO)_y$ bedeuten, wobei jedes R für einen Alkylenrest mit 2 bis 12 C-Atomen und y für eine ganze Zahl von 1 bis 80 stehen,

$B_1$ und $B_2$ gleiche oder verschiedene Polyalkylenoxidreste der Art $(R'O)_z$ bedeuten, wobei 60 bis 100 % der R'-Reste für eine $-CH_2-CH_2$-Gruppe, die gegebenenfalls vorhandenen weiteren R'-Reste jeweils für einen Alkylenrest mit 3 bis 12 C-Atomen und z für eine ganze Zahl von 50 bis 200 stehen,

Z Wasserstoff,

$-NH-SO_3^{\ominus}M^{\oplus}$, $-SO_3^{\ominus}M^{\oplus}$, 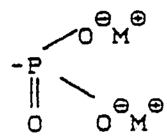

oder $-CH_2-COO^{\ominus}M^{\oplus}$

bedeutet, wobei $M^{\oplus}$ für ein Äquivalent eines Metallions oder für $NH_4^{\oplus}$ steht, das lösliche Sulfonium-, Phosphonium- oder Carboxylsalze bildet und

n eine ganze Zahl von 1 bis 8 bedeutet.

Besonders bevorzugte alkoxylierte Aminopolyether der Formel (I) sind solche, bei denen Q, $A_1$, $A_2$, $B_1$, $B_2$, Z und n jeweils die als bevorzugt angegebene Bedeutung haben und bei denen $M^{\oplus}$ für ein Alkalimetallion, z. B. ein Natrium- oder Kaliumion, ein Äquivalent eines Erdalkaliions, z. B. ein Äquivalent eines Magnesium- oder Calciumions oder für $NH_4^{\oplus}$ steht.

Die erfindungsgemäßen alkoxylierten Aminopolyether der Formel (I) können ein Molekulargewicht von beispielsweise 10 000 bis 150 000 aufweisen. Bevorzugt liegt das Molekulargewicht im Bereich von 15 000 bis 50 000.

Die Herstellung der erfindungsgemäßen alkoxylierten Aminonopolyether der Formel (I) erfolgt durch Addition von einem $C_2$- bis $C_{40}$-Alkylenoxid an einen Amino-polyalkylenether in der Weise, daß zunächst jeweils mindestens zwei Alkylenoxid-Einheiten mit einer Aminogruppe reagieren.

Nach der Addition und Polymerisation der $C_2$- bis $C_{40}$-Alkylenoxide kann die weitere Umsetzung mit Ethylenoxid oder einem Gemisch aus $C_2$- bis $C_{40}$-Epoxiden erfolgen. Die so hergestellten Polyalkylenpolyamino-alkylenether können gegebenenfalls noch mit Amidosulfonsäuren und Harnstoff, Säurechloriden der Schwefelsäure oder der Phosphorsäure oder Chloressigsäureestern umgesetzt und durch nachfolgende Neutralisation oder Verseifung in die ionischen Verbindungen (mit $Z \neq H$) überführt werden.

Geeignete Reaktionsbedingungen für die Umsetzung von $C_2$- bis $C_{40}$-Alkylenoxiden mit dem Aminopolyalkylenether sind beispielsweise Atmosphärendruck oder erhöhter Druck, Temperaturen zwischen 50 und 150 °C und die Gegenwart einer Base als Katalysator, beispielsweise die Gegenwart von Alkalimetallhydroxiden oder -alkoholaten. Der Polymerisationsgrad bzw. die Größe dieses Blocks wird durch das Molverhältnis von $C_2$- bis $C_{40}$-Alkylenoxid zu Amino-polyalkylenether bestimmt, das vorzugsweise im Bereich von 4 : 1 bis 1 600 : 1 liegt. Nach dieser Addition der $C_2$- bis $C_{40}$-Alkylenoxide an den Aminopolyalkylenether kann dann die Addition von Ethylenoxid erfolgen, wobei vorzugsweise 50 bis 200 Ethylenoxideinheiten pro Kette hintereinander eingeführt werden. Hierzu können auch Gemische von $C_2$- bis $C_{40}$-Epoxiden verwendet werden.

Im Rahmen der Verwendung von $C_2$ bis $C_{40}$-Alkylenoxiden sind $C_2$- bis $C_{12}$-Alkylenoxide bevorzugt.

Bei den für die Herstellung der erfindungsgemäßen Verbindungen einzusetzenden Amino-polyalkylenether handelt es sich um Polyalkylenether mit Aminoendgruppen und einem mittleren Molgewicht von 82 bis 30 000. Diese können z. B. durch Aminierung von Polyalkylenglykolethern mit Ammoniak in Gegenwart von Raney-Nickel und Wasserstoff (siehe BE-PS 634 741) erhalten werden, durch Umsetzung des entsprechenden Polyols mit Ammoniak und Wasserstoff in Gegenwart eines Nickel-Kupfer-Chrom-Katalysators (siehe US-PS 3 654 370) oder durch Hydrierung von cyanethylierten Polyoxypropylenethern (siehe DE-PS 1 93 671). Der molare Anteil der Aminogruppen an den Endgruppen dieser einzusetzenden Polyether kann z. B. 10 bis 100 % betragen. Vorzugsweise liegt dieser Anteil bei 50 bis 100 %.

Weitere Methoden zur Herstellung von Polyoxyalkylen-(Polyether)-aminen sind in der US-PS 3 155 728, der US-PS 3 236 895 und der FR-1 551 605 beschrieben. Durch Umsetzung von NCO-Prepolymeren auf Basis von Polyhydroxypolyethern mit Hydroxylgruppen aufweisenden Enaminen, Aldiminen oder Ketiminen und anschließender Hydroxylse kann man gemäß der DE-OS 2 546 536 oder der US-PS 3 865 791 Aminogruppen aufweisende Polyether erhalten. Nach der DE-OS 2 948 491 können Aminopolyether durch Hydrolyse von endständigen Isocyanatgruppen aufweisenden Verbindungen erhalten werden. Bei diesem Verfahren werden vorzugsweise zwei Hydroxylgruppen aufweisende Polyether mit Polyisocyanaten zu NCO-Prepolymeren umgesetzt und in einem zweiten Schritt die

Isocyanatgruppen durch Hydrolyse in Aminogruppen überführt.

Die erfindungsgemäßen alkoxylierten Aminopolyether der Formel (I) können für die weitere Verwendung, beispielsweise als Zusatzstoff für Kohle-Wasser-Aufschlämmungen, in fester Form bereitgehalten werden, beispielsweise in Form von Schuppen, Pastillen oder Granulaten. Da die erfindungsgemäßen alkoxylierten Aminopolyether der Formel (I) wasserlöslich sind, ist es häufig vorteilhaft, sie für die weitere Verwendung in Form wäßriger Lösungen bereitzuhalten. Solche Lösungen können beispielsweise eine Konzentration von 5 bis 60 Gew.-%, vorzugsweise 20 bis 50 Gew.-%, jeweils bezogen auf die Lösung, aufweisen.

Derartige wäßrige Lösungen können zusätzlich organische, mit Wasser mischbare Lösungsmittel enthalten. Das ist im allgemeinen dann vorteilhaft, wenn man zur Erleichterung der Anwendung, insbesondere bei relativ konzentrierten Lösungen, die Viskosität erniedrigen möchte. Hierfür geeignete Lösungsmittel sind beispielsweise aliphatische Alkohole mit 1 bis 6 C-Atomen, wie Methanol, Ethanol, Propanol, Isopropanol, Butanol, Isobutanol, Pentanol, Isopentanol, Hexanol und/oder Isohexanol. Solche organischen, mit Wasser mischbaren Lösungsmittel können, bezogen auf die Lösung der Verbindungen der Formel (I), beispielsweise in Mengen von 5 bis 40 Gew.-% vorhanden sein. Vorzugsweise beträgt diese Menge 10 bis 25 Gew.-%.

Die vorliegende Erfindung betrifft weiterhin Kohle-Wasser-Aufschlämmungen, die 0,01-5 gew.-% alkoxylierte Aminopolyether der Formel (I) enthalten.

Vorzugsweise enthalten die erfindungsgemäßen Kohle-Wasser-Aufschlämmungen solche alkoxylierte Aminopolyether der Formel (I), bei denen unabhängig voneinander

Q der Rest eines auf Ethylenglykol, Propylenglykol, Trimethylolpropan, Glycerin, Pentaerythrit, Ethylendiamin oder Hexamethylendiamin gestarteten Polypropylenoxids, Poly-ethylen-polypropylenoxids, Polytetramethylenoxids oder Polytetramethylenoxid-polydecenoxids, jeweils mit einem mittleren Molgewicht von 82 bis 7000, bedeutet,

$A_1$ und $A_2$ gleiche oder verschiedene Mono- oder Polyalkylenoxidreste der Art $(RO)_y$ bedeuten, wobei jedes R für einen Alkylenrest mit 2 bis 12 C-Atomen und y für eine ganze Zahl von 1 bis 80 stehen,

$B_1$ und $B_2$ gleiche oder verschiedene Polyalkylenoxidreste der Art $(R'O)_z$ bedeuten, wobei 60 bis 100 % der R'-Reste für eine $-CH_2-CH_2$-Gruppe, die gegebenenfalls vorhandenen weiteren R'-Reste jeweils für einen Alkylenrest mit 3 bis 12 C-Atomen und z für eine ganze Zahl von 50 bis 200 stehen,

Z Wasserstoff,

$-NH-SO_3^{\ominus}M^{\oplus}$, $-SO_3^{\ominus}M^{\oplus}$, 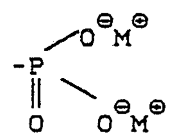

oder $-CH_2-COO^{\ominus}M^{\oplus}$

bedeutet, wobei $M^{\oplus}$ für ein Äquivalent eines Metallions oder für $NH_4^{\oplus}$ steht, das lösliche Sulfonium-, Phosphonium- oder Carboxylsalze bildet und

n eine ganze Zahl von 1 bis 8 bedeutet.

Besonders bevorzugt enthalten die erfindungsgemäßen Kohle-Wasser-Aufschlämmungen solche alkoxylierte Aminopolyether der Formel (I), bei denen Q, $A_1$, $A_2$, $B_1$, $B_2$, Z und n jeweils die als bevorzugt angegebene Bedeutung haben und bei denen $M^{\oplus}$ für ein Alkalimetallion, ein Äquivalent eines Erdalkalimetallions oder für $NH_4^{\oplus}$ steht.

Die erfindungsgemäßen Kohle-Wasser-Aufschlämmungen enthalten alkoxylierte Aminopolyether der Formel (I) in einer Menge von 0,01 bis 5 Gew.-%. Vorzugsweise beträgt diese Menge 0,1 bis 2 Gew.-%.

Als Kohle kommen für die erfindungsgemäßen Kohle-Wasser-Aufschlämmungen die verschiedensten Kohletypen in Frage, beispielsweise alle Arten von mineralischen und synthetischen Kohlen. Insbesondere seien genannt :

Anthrazit, Koks, Braunkohle, Moorkohle, Holzkohle und Kohlenstoff in der Graphit-Modifikation. Von ganz besonderem Interesse ist jedoch Steinkohle.

In den erfindungsgemäßen Aufschlämmungen kann die Kohle in unterschiedlicher Korngröße enthalten sein. Bevorzugt enthalten sie feingemahlene Kohle mit einer mittleren Korngröße von weniger als 300 µm. Besonders bevorzugt enthalten sie Kohle, die zu 75 bis 100 Gew.-% aus Teilchen besteht, die kleiner als 100 µm sind.

Die erfindungsgemäßen Aufschlämmungen können Kohle beispielsweise in einer Menge von 30 bis 85 Gew.-% enthalten. Vorzugsweise enthalten sie 55 bis 80 Gew.-% Kohle.

Neben Wasser, Kohle und alkoxylierten Aminopolyethern der Formel (I) können die erfindungsgemäßen Aufschlämmungen gegebenenfalls weitere Bestandteile enthalten, beispielsweise organische, mit Wasser mischbare Lösungsmittel, Entschäumer, Stabilisatoren gegen Sedimentation, Biozide, andere grenzflächenaktive Stoffe als die der Formel (I) und/oder andere Brennstoffe als Kohle.

Bei den organischen, mit Wasser mischbaren Lösungsmitteln kann es sich nach Qualität und Quantität um solche handeln, wie sie oben als Zusätze zu wäßrigen Lösungen für alkoxylierte

Aminopolyether der Formel (I) beschrieben wurden.

Als Entschäumer kommen beispielsweise handelsübliche Produkte infrage, wie die verschiedenen Surfynol[R] — Typen der Fa. Air Products.

Diese können in Mengen von 0 bis 0,5 %, vorzugsweise von 0,02 bis 0,1 % in der Kohleaufschlämmung enthalten sein.

Als Stabilisatoren gegen Sedimentation kommen beispielsweise Cellulosederivate, Xanthane, Guar-Gummi u.a. in Frage. Sie können in Mengen von 0 bis 1 %, vorzugsweise von 0,01 bis 0,2 % in den Kohleaufschlämmungen enthalten sein.

Als andere Grenzflächen-aktive Stoffe kommen beispielsweise ionische und/oder nicht-ionische Netzmittel oder weitere ionische und/oder nicht-ionische Dispergiermittel in Frage. Sie können beispielsweise in Mengen von 0 bis 1 %, vorzugsweise von 0,02 bis 0,5 % in den Kohleaufschlämmungen enthalten sein.

Als andere Brennstoffe kommen beispielsweise flüssige Brennstoffe in Frage, wie Heizöl, Naphtha, Rohöl, Methanol oder Ethanol. Sie können beispielsweise in Mengen von 0 bis 60 Gew.-%, vorzugsweise 1 bis 30 Gew.-% in den Kohleaufschlämmungen enthalten sein.

Die Herstellung der erfindungsgemäßen Kohle-Wasser-Aufschlämmungen kann nach verschiedenen Verfahren erfolgen.

So ist es möglich, zuerst eine Lösung der erfindungsgemäßen alkoxylierten Aminopolyether in Wasser herzustellen oder eine vorhandene wäßrige Lösung davon auf die gewünschte Konzentration zu bringen und dann das Kohlepulver unter Rühren hinzuzugeben. Man kann auch zuerst eine wäßrige Lösung der erfindungsgemäßen Verbindungen in geeigneter Konzentration mit grobkörniger Kohle mischen und dann dieses Gemisch mahlen bis die gewünschte Korngröße der Kohle vorliegt.

Weitere Zusätze können dem Gemisch vor oder nach der Zugabe der Kohle zugegeben werden. Weitere Zusätze, insbesondere flüssige Brennstoffe, können auch zusammen mit der Kohle eingebracht werden.

Im Vergleich zu den bekannten Kohle-Wasser-Aufschlämmungen zeigen die erfindungsgemäßen Kohle-Wasser-Aufschlämmungen ein verbessertes Fließverhalten. Das bedeutet, daß die erfindungsgemäßen Aufschlämmungen bei gleichbleibender Viskosität mehr Kohle enthalten oder bei gleichem Kohlegehalt eine niedrigere Viskosität aufweisen als die bekannten Kohle-Wasser-Auschlämmungen.

Ihrem rheologischen Verhalten nach sind Kohle-Wasser-Aufschlämmungen meistens nichtnewtonsche plastische Flüssigkeiten mit strukturviskosem Verhalten und einer Fließgrenze. Ihre Viskosität hängt dann von der Schergeschwindigkeit (scheinbare Viskosität) ab. Die Viskosität der erfindungsgemäßen Kohle-Wasser-Aufschlämmungen kann beispielsweise im Bereich von 3 bis 10 000 mPa · s liegen. Bevorzugt liegt sie im Bereich von 5 bis 3 000 mPa · s, jeweils bei einer Schergeschwindigkeit von 100 $s^{-1}$.

Besonders günstig ist neben dem Fließverhalten das Lagerverhalten der erfindungsgemäßen Kohle-Wasser-Aufschlämmungen. So ist es möglich, die erfindungsgemäßen Kohle-Wasser-Aufschlämmungen auch nach einer Lagerung leicht wieder in Bewegung zu bringen und das Zementieren bei vorübergehendem Absetzen der Kohle zu verhindern. Dies ist besonders vorteilhaft, sowohl beim Transport, als auch bei der Verbrennung oder sonstiger Weiterverarbeitung der Kohle-Wasser-Aufschlämmungen.

Die erfindungsgemäßen Kohle-Wasser-Aufschlämmungen können direkt, d.h. ohne weitere Zubereitung, der Verbrennung, beispielsweise in einem Heizkraftwerk, zugeführt werden.

## Beispiele

A. Herstellungsbeispiele für alkoxylierte Aminopolyether der Formel (I) :

### Beispiel 1

Zu 8,4 g (0,08 Mol) 2,2-Diamino-diethylether wurden 5 g Wasser gegeben und unter Stickstoff (Druck 1,5 bar) bei 100 °C mit 17,6 g (0,3 Mol) Propylenoxid versetzt. Es wurden nach 5 Stunden 16 g einer 45 %igen wäßrigen Kalilauge zugegeben und anschließend bei 100 °C Wasser unter Vakuum abdestilliert. Nun wurden 1 210 g (20,8 Mol) Propylenoxid innerhalb von 11 Stunden und 4 462 g (101,4 Mol) Ethylenoxid innerhalb von 14 Stunden, jeweils bei 120 bis 130 °C zugegeben. Anschließend wurde das Reaktionsprodukt mit 8,55 g (0,14 Mol) 99,8 %iger Essigsäure neutralisiert. Es wurden 5 600 g eines wachsartigen Polyethers vom Schmp. 57 bis 60 °C erhalten.

OH-Zahl : 6
Viskosität $\eta_{75}$ : 4 483 mPa · s

### Beispiel 2

Zu 32 g eines α,ω-Diamino-polypropylenoxids des mittleren Molgewichts von 400 wurden 5 g Wasser gegeben und unter Stickstoff (Druck 1,5 bar) bei 100 °C mit 17,6 g (0,3 Mol) Propylenoxid versetzt. Es wurden nach 5 Stunden 16 g einer 45 %igen wäßrigen Kalilauge zugegeben und anschließend bei 100 °C

Wasser unter Vakuum abdestilliert. Nun wurden 1 751,4 g (30,2 Mol) Propylenoxid innerhalb von 11,5 Stunden und 4 178 g (94,9 Mol) Ethylenoxid innerhalb von 13,5 Stunden, jeweils bei 120 bis 130 °C zugegeben. Anschließend wurde das Reaktionsprodukt mit 8,55 g (0,14 Mol) 99,8 %iger Essigsäure neutralisiert. Es wurden 5 500 g eines wachsartigen Polyethers vom Schmp. 53 bis 54 °C erhalten.

OH-Zahl : 10,4
Viskosität $\eta_{75}$ : 2 699 mPa · s

Beispiel 3

Zu 62,2 g eines α,ω-Diaminopolyethers des mittleren Molgewichts von 779 bestehend aus 22,4 % Propylenglykol- und 77,6 % Ethylenglykol-Einheiten wurden 5 g Wasser gegeben und unter Stickstoff (Druck 1,5 bar) bei 100 °C mit 17,6 g (0,30 Mol) Propylenoxid versetzt. Es wurden nach 5 Stunden 16 g einer 45 %igen wäßrigen Kalilauge zugegeben und anschließend bei 100 °C Wasser unter Vakuum abdestilliert. Nun wurden 1 750 g (30,2 Mol) Propylenoxid innerhalb von 14 Stunden und 4 200 g (95,5 Mol) Ethylenoxid innerhalb von 14,5 Stunden, jeweils bei 120 bis 130 °C zugegeben. Anschließend wurde das Reaktionsprodukt mit 8,55 g (0,14 Mol) 99,8 %iger Essigsäure neutralisiert. Es wurden 5 620 g eines wachsartigen Polyethers von Schmp. 55 °C erhalten.

OH-Zahl : 9,9
Viskosität $\eta_{75}$ : 2 839 mPa · s

Beispiel 4

Zu 160,7 g eines α,ω-Diamino-polypropylenoxids des mittleren Molgewichts von 2000 wurden 2,0 g Wasser zugegeben und bei 100 °C unter Stickstoff (Druck 1,5 Torr) mit 17,7 g (0,30 Mol) Propylenoxid versetzt. Es wurden nach 5 Stunden 16 g einer 45 %igen wäßrigen Kalilauge zugegeben und anschließend bei 100 °C Wasser im Vakuum abdestilliert. Nun wurden 1 150,2 g (19,8 Mol) Propylenoxid innerhalb von 18 Stunden und 4 671,4 g (106,2 Mol) Ethylenoxid in 15,5 Stunden, jeweils bei 120 bis 130 °C zugegeben. Anschließend wurde das Reaktionsprodukt mit 8,55 g (0,14 Mol) 99,9 %iger Essigsäure neutralisiert. Es wurden 5 300 g eines wachsartigen Polyethers vom Schmp. 57-58 °C erhalten.

OH-Zahl : 8,6
Viskosität $\eta_{75}$ : 4 224 mPa · s

Beispiel 5

Zu 160,7 g eines α,ω-Diaminopolypropylenoxids des mittleren Molgewichts von 2000 wurden 16 g einer 45 %igen wäßrigen Kalilauge gegeben und anschließend bei 100 °C Wasser im Vakuum abdestilliert. Bei 120 bis 130 °C wurden 1 751,8 g (30,2 Mol) Propylenoxid und darauf 4 087,5 g (92,9 Mol) Ethylenoxid zugefügt. Die gesamte Reaktionsdauer betrug 42 Stunden. Es wurden nach Zugabe von 52,2 g 12 %iger wäßriger Schwefelsäure (0,06 Mol) 5 400 g eines wachsartigen Polyethers vom Schmp. 54 °C erhalten.

OH-Zahl : 8
Viskosität $\eta_{75}$ : 3 656 mPa · s

Beispiel 6

Zu 321 g eines α,ω-Diaminopolypropylenoxids des mittleren Molgewichs von 3412 wurden 5 g Wasser gegeben und unter Stickstoff (Druck 1,5 bar) bei 100 °C mit 17 g (0,29 Mol) Propylenoxid versetzt. Es wurden nach 5 Stunden 16 g einer 45 %igen wäßriger Kalilauge zugegeben und anschließend bei 100 °C Wasser im Vakuum abdestilliert. Nun wurden 1 119 g (19,3 Mol) Propylenoxid innerhalb von 11 Stunden und 4 543 g (103,3 Mol) Ethylenoxid innerhalb von 14 Stunden, jeweils bei 120 bis 130 °C, zugegeben. Anschließend wurde das Reaktionsprodukt mit 8,55 g (0,14 Mol), 99,8 %iger Essigsäure neutralisiert. Es wurden 5 650 g eines wachsartigen Polyethers vom Schmp. 55-56 °C erhalten.

OH-Zahl : 11,3
Viskosität $\eta_{75}$ : 2 840 mPa · s

Beispiel 7

Zu 280 g eines Polypropylenoxids des mittleren Molgewichts von 5250 gestartet auf Trimethylolpropan und mit drei endständigen primären Aminogruppen wurden 5 g Wasser gegeben und unter Stickstoff (Druck 1,5 bar) bei 100 °C mit 17,6 g (0,3 Mol) Propylenoxid versetzt. Es wurden nach 5 Stunden 16 g einer 45 %igen wäßrigen Kalilauge zugegeben und anschließend bei 100 °C Wasser unter Vakuum abdestilliert.

Nun wurden 1 327,6 g (22,9 Mol) Propylenoxid innerhalb von 12 Stunden und 4 628 g (105,2 Mol) Ethylenoxid innerhalb von 16 Stunden, jeweils bei 120 bis 130 °C zugegeben. Anschließend wurde das Reaktionsprodukt mit 8,55 g (0,14 Mol) 99,8 %iger Essigsäure neutralisiert. Es wurden 5 700 g eines wachsartigen Polyethers vom Schmp. 51-55 °C erhalten.

OH-Zahl : 8,3
Viskosität $\eta_{75}$ : 4 610 mPa · s

Beispiel 8

Zu 29,3 g eines Polypropylenoxids des mittleren Molgewichts von 440, gestartet auf Trimethylolpropan und mit drei endständigen primären Aminogruppen wurden 5 g Wasser gegeben und unter Stickstoff (Druck 1,5 bar) bei 100 °C mit 17,6 g (0,3 Mol) Propylenoxid versetzt. Es wurden nach 5 Stunden 16 g einer 45 %igen wäßrigen Kalilauge zugegeben und anschließend bei 100 °C Wasser unter Vakuum abdestilliert. Nun wurden 1 732,3 g (29,9 Mol) Propylenoxid innerhalb von 12 Stunden und 4 211 g (95,7 Mol) Ethylenoxid innerhalb von 13 Stunden, jeweils bei 120 bis 130 °C zugegeben. Anschließend wurde das Reaktionsprodukt mit 8,55 g (0,14 Mol) 99,8 %iger Essigsäure neutralisiert. Es wurden 5 500 g eines wachsartigen Polyethers vom Schmp. 52-55 °C erhalten.

OH-Zahl : 10,7
Viskosität $\eta_{75}$ : 2 842 mPa · s

Beispiel 9

Zu 256 g eines Polypropylenoxids des mittleren Molgewichts von 6400, gestartet auf Pentaerythrit und mit vier endständigen primären Aminogruppen wurden 5 g Wasser gegeben und unter Stickstoff (Druck 1,5 bar) bei 100 °C mit 17,6 g (0,3 Mol) Propylenoxid versetzt. Es wurden nach 5 Stunden 16 g einer 45 %igen wäßrigen Kalilauge zugegeben und anschließend bei 100 °C Wasser unter Vakuum abdestilliert. Nun wurden 1 170,4 g (20,2 Mol) Propylenoxid innerhalb von 11,5 Stunden und 4 511,5 g (102,5 Mol) Ethylenoxid innerhalb von 14,5 Stunden, jeweils bei 120 bis 130 °C zugegeben. Anschließend wurde das Reaktionsprodukt mit 8,55 g (0,14 Mol) 99,8 %iger Essigsäure neutralisiert. Es wurden 5 400 g eines wachsartigen Polyethers vom Schmp. 56-59 °C erhalten.

OH-Zahl : 9,4
Viskosität $\eta_{75}$ : 3 416 mPa · s

Beispiel 10

600 g des gemäß Beispiel 2 erhaltenen Produkts wurden bei 100 °C im Vakuum getrocknet. Dann wurde bei 75 °C eine Mischung aus 6 g Harnstoff und 10 g Amidosulfonsäure hinzugefügt und unter gutem Rühren 1 Stunde auf 90 °C und 6 Stunden auf 100 bis 150 °C aufgeheizt. Anschließend wurde der Ansatz mit 0,5 $cm^3$ 25 %iger wäßriger Ammoniaklösung auf pH 7 bis 8 gestellt (gemessen in 10 %iger wäßriger Lösung). Aus diesem Produkt ließ sich ohne Lösungsmittel eine 60 %ige wäßrige Lösung herstellen.

B. Herstellungsbeispiele für Kohle-Wasser-Aufschlämmungen

Beispiel 11

Es wurde folgende Steinkohle verwendet :

| | |
|---|---|
| Chemische Analyse : | |
| Kohlenstoff | 77,1 Gew.-% |
| Wasserstoff | 4,3 Gew.-% |
| Stickstoff | 1,3 Gew.-% |
| Sauerstoff | 3.8 Gew.-% |
| Schwefel | 0,9 Gew.-% |
| Gesamtfeuchtigkeit | 9,8 Gew.-% |

Siebanalyse : (Siebrückstand) 15 Ultraschall

| | |
|---|---|
| 192 µm | 0,0 Gew.-% |
| 96 µm | 8,2 Gew.-% |
| 64 µm | 19,8 Gew.-% |
| 48 µm | 27,0 Gew.-% |

| | |
|---|---|
| 24 µm | 51,7 Gew.-% |
| 16 µm | 63,2 Gew.-% |
| 8 µm | 80,0 Gew.-% |
| 2 µm | 94,3 Gew.-% |

Jeweils 2,5 g der gemäß den Beispielen 1 bis 10 hergestellten Produkte (= Additiv) wurden in jeweils 92,9 g Wasser gelöst. Unter Rühren wurden jeweils 404,6 g der obengenannten Kohle (d. h. 365 g trockene Kohle) zugegeben. Es entstand eine 73 %ige wäßrige Kohle-Aufschlämmung, die 2 Stunden mit 1 500 Umdrehungen pro Minute nachgerührt wurde. Die Viskosität wurde mit einem Haake-Viskosimeter RV 100 (Meßkörper MV II PSt) bei 23 °C und bei einer Schergeschwindigkeit von D = 100 $s^{-1}$ ermittelt. Die Ergebnisse sind aus Tabelle 1 ersichtlich.

Tabelle 1

| Additiv erhalten gemäß Beispiel | Viskosität (mPa·s) bei 100 $s^{-1}$ |
|---|---|
| 1 | 800 |
| 2 | 750 |
| 3 | 800 |
| 4 | 900 |
| 6 | 850 |
| 7 | 850 |
| 8 | 800 |
| 9 | 750 |
| 10 | 750 |

Beispiel 12

Es wurde folgende Steinkohle verwendet :
Chemische Analyse :

| | |
|---|---|
| Kohlenstoff | 68,0 Gew.-% |
| Wasserstoff | 5,0 Gew.-% |
| Stickstoff | 2,0 Gew.-% |
| Sauerstoff | 12,4 Gew.-% |
| Schwefel | 0,2 Gew.-% |
| Gesamtfeuchtigkeit | 1,6 Gew.-% |

Siebanalyse : (Siebrückstand) 15 Ultraschall

| | |
|---|---|
| 192 µm | 0,0 Gew.-% |
| 96 µm | 11,3 Gew.-% |
| 48 µm | 34,9 Gew.-% |
| 24 µm | 61,6 Gew.-% |
| 16 µm | 71,9 Gew.-% |
| 8 µm | 85,2 Gew.-% |
| 2 µm | 95,5 Gew.-% |

Aus dieser Kohle wurden 64 %ige Kohle-Wasser-Aufschlämmungen hergestellt wie im Beispiel 11 beschrieben. Die Ergebnisse der Viskositätsmessungen sind aus Tabelle 2 ersichtlich.

Tabelle 2

| Additiv erhalten gemäß Beispiel | Viskosität (mPa·s) bei 100 $s^{-1}$ |
|---|---|
| 1 | 650 |
| 2 | 650 |
| 3 | 750 |
| 4 | 750 |
| 5 | 850 |
| 6 | 800 |
| 7 | 800 |
| 8 | 750 |
| 10 | 650 |

## Beispiel 13

Es wurde folgende Steinkohle verwendet :

| | |
|---|---|
| Chemische Analyse : | |
| Kohlenstoff | 82,9 Gew.-% |
| Wasserstoff | 5,7 Gew.-% |
| Stickstoff | 1,7 Gew.-% |
| Sauerstoff | 6,4 Gew.-% |
| Schwefel | 1,0 Gew.-% |
| Gesamtfeuchtigkeit | 3,1 Gew.-% |

Siebanalyse : (Siebrückstand) 15 Ultraschall

| | |
|---|---|
| 192 µm | 0,0 Gew.-% |
| 128 µm | 8,5 Gew.-% |
| 96 µm | 17,6 Gew.-% |
| 64 µm | 35,0 Gew.-% |
| 48 µm | 46,0 Gew.-% |
| 24 µm | 69,8 Gew.-% |
| 16 µm | 78,8 Gew.-% |
| 8 µm | 87,0 Gew.-% |
| 2 µm | 96,5 Gew.-% |

Aus dieser Kohle wurden 68 %ige Kohle-Wasser-Aufschlämmungen hergestellt wie in Beispiel 11 beschrieben. Die Ergebnisse der Viskositätsmessungen sind aus Tabelle 3 ersichtlich.

Tabelle 3

| Additiv erhalten gemäß Beispiel | Viskosität (mPa·s) bei 100 $s^{-1}$ |
|---|---|
| 1 | 650 |
| 2 | 600 |
| 3 | 700 |
| 6 | 700 |
| 7 | 700 |
| 8 | 650 |
| 10 | 600 |

## Beispiel 14

Es wurde wie im Beispiel 11 beschrieben gearbeitet, jedoch nur das Additiv erhalten gemäß Beispiel 2 eingesetzt und der Feststoffgehalt der Aufschlämmung variiert. Die Ergebnisse der Viskositätsmessungen sind aus Tabelle 4 ersichtlich.

Tabelle 4

| Feststoffgehalt (Gew.-%, bezogen auf Aufschlämmung) | Viskosität (mPa·s) bei 100 $s^{-1}$ |
|---|---|
| 68 | 200 |
| 70 | 350 |
| 73 | 750 |
| 75 | 1200 |

## Beispiel 15

Es wurde wie im Beispiel 12 beschrieben gearbeitet, jedoch nur das Additiv erhalten gemäß Beispiel 2 eingesetzt und dessen Gehalt variiert. Die Ergebnisse der Viskositätsmessungen sind aus Tabelle 5 ersichtlich.

(Siehe Tabellen Seite 10 f.)

Tabelle 5

| Gew.-% Additiv, bezogen auf Aufschlämmung | Feststoffgehalt (Gew.-%, bezogen auf Aufschlämmung) | Viskosität (mPa.s) bei 100 $s^{-1}$ |
|---|---|---|
| 0,3 | 64 | 850 |
| 0,4 | 64 | 650 |
| 0,5 | 64 | 650 |
| 0,7 | 64 | 700 |
| 1,0 | 64 | 800 |

Beispiel 16

Es wurde wie im Beispiel 11 beschrieben gearbeitet, jedoch wurde ein Teil des Wassers durch Methanol ersetzt und der Feststoffgehalt der Aufschlämmung variiert. Die Ergebnisse der Viskositätsmessungen sind aus Tabelle 6 ersichtlich.

Tabelle 6

| Additiv erhalten gemäß Beispiel | Gew.-% Kohle bezogen auf Aufschlämmung | Gewichtsverhältnis Wasser/Methanol | Viskosität (mPa.s) bei 100 $s^{-1}$ |
|---|---|---|---|
| 2 | 71 | 7:3 | 750 |
| 4 | 71 | 7:3 | 1000 |
| 2 | 73 | 7:3 | 1300 |
| 2 | 73 | 1:1 | 2500 |
| 4 | 73 | 7:3 | 1500 |

Beispiel 17 (zum Vergleich)

Es wurde wie im Beispiel 11 beschrieben gearbeitet, jedoch wurden jeweils 0,5 Gew.-%, bezogen auf die Aufschlämmung, eines Additives gemäß dem Stand der Technik eingesetzt und mit 3 verschiedenen Kohlesorten vergleichend getestet. Die Ergebnisse der Viskositätsmessungen sind aus Tabelle 7 ersichtlich.

Aus der Tabelle 7, Nr. 1, 4 und 7 ergibt sich im Vergleich mit Tabelle 1, daß die erfindungsgemäßen Additive bei 73 %igen Kohle-Wasser-Aufschlämmungen Viskositäten von 750 bis 900 mPa·s ergeben, während nach dem Stand der Technik Viskositäten von 1 000 bis 1 100 mPa·s erreicht werden.

Entsprechendes gilt für 64 %ige Kohle-Wasser-Aufschlämmungen, wo erfindungsgemäß Viskositäten von 650 bis 850 mPa·s erhalten werden (siehe Tabelle 2) und gemäß dem Stand der Technik solche von 1 050 bis 1 350 mPa·s (siehe Tabelle 7, Nr. 2, 5 und 8).

Ebenso ist es bei 68 %igen Kohle-Wasser-Aufschlämmungen, bei denen mit erfindungsgemäßen Additiven Viskositäten von 600 bis 700 mPa.s erhalten werden (siehe Tabelle 3) und gemäß dem Stand der Technik solche von 1 000 bis 1 200 mPa·s (siehe Tabelle 7, Nr. 3, 6 und 9).

(Seihe Tabelle 7 Seite 11 f.)

Tabelle 7

| Nr. | Kohle wie in Beispiel | Feststoffgehalt (Gew.-%, bezogen auf Aufschlämmung) | Startermolekül für das Additiv | mittlere Funktionalität | Viskosität (mPa.s) bei 10 $s^{-1}$ |
|---|---|---|---|---|---|
| 1 | 11 | 73 | Stearylalkohol | 1 | 1100 |
| 2 | 12 | 64 | (gemäß US-PS | 1 | 1200 |
| 3 | 13 | 68 | 4 302 212) | 1 | 1000 |
| 4 | 11 | 73 | Pentaerythrit | 4 | 1000 |
| 5 | 12 | 64 | (gemäß JP-OS | 4 | 1350 |
| 6 | 13 | 68 | 58/125787) | 4 | 1050 |
| 7 | 11 | 73 | Ethylendiamin (110 | 4 | 1100 |
| 8 | 12 | 64 | Propylenoxid-140 | 4 | 1050 |
| 9 | 13 | 68 | Ethylenoxidein- | 4 | 1200 |
| | | | heiten gemäß | | |
| | | | US-PS 4 358 293) | | |

**Patentansprüche**

1. Alkoxylierte Aminopolyether der Formel (I)

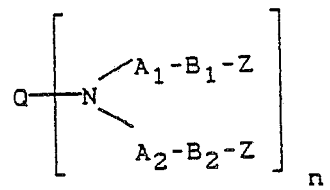

(I)

in der

Q einen gegebenenfalls mehrwertigen Polyalkylenoxidrest bedeutet, der sich formal durch Abtrennung der endständigen Aminogruppen aus einem Aminopolyether ableitet und ein mittleres Molgewicht von 82 bis 30 000 besitzt,

$A_1$ und $A_2$ gleiche oder verschiedene Mono- oder Polyalkylenoxidreste der Art $(RO)_y$ bedeuten, wobei jedes R für einen Alkylenrest mit 2 bis 40 C-Atomen und y für eine ganze Zahl von 1 bis 200 stehen,

$B_1$ und $B_2$ gleiche oder verschiedene Mono- oder Polyalkylenoxidreste der Art $(R'O)_z$ bedeuten, wobei mindestens 50 % der R'-Reste für eine $—CH_2—CH_2$-Gruppe, die gegebenenfalls vorhandenen weiteren R'-Reste jeweils für einen Alkylenrest mit 3 bis 40 C-Atomen und z eine ganze Zahl von 1 bis 300 stehen,

Z Wasserstoff,

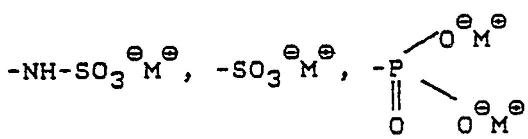

oder $—CH_2—COO^{\ominus}M^{\oplus}$

bedeutet, wobei $M^{\oplus}$ für ein Äquivalent eines Metallions oder für $NH_4^{\oplus}$ steht und

n eine ganze Zahl von 1 bis 30 bedeutet.

2. Alkoxylierte Aminopolyether gemäß Anspruch 1, dadurch gekennzeichnet, daß in Formel (I) unabhängig voneinander

Q der Rest eines auf Ethylenglykol, Propylenglykol, Trimethylolpropan, Glycerin, Pentaerythrit, Ethylendiamin oder Hexamethylendiamin gestarteten Polypropylenoxids, Polyethylen-polypropylenoxids, Polytetramethylenoxids oder Polytetramethylenoxid-polydecenoxids, jeweils mit einem mittleren Molgewicht von 82 bis 7000,

bedeutet,

$A_1$ und $A_2$ gleiche oder verschiedene Mono- oder Polyalkylenoxidreste der Art $(RO)_y$ bedeuten, wobei jedes R für einen Alkylenrest mit 2 bis 12 C-Atomen und y für eine ganze Zahl von 1 bis 80 stehen,

$B_1$ und $B_2$ gleiche oder verschiedene Polyalkylenoxidreste der Art $(R'O)_z$ bedeuten, wobei 60 bis 100 % der R'-Reste für eine $—CH_2—CH_2$-Gruppe, die gegebenenfalls vorhandenen weiteren R'-Reste jeweils für einen Alkylenrest mit 3 bis 12 C-Atomen und z für eine ganze Zahl von 50 bis 200 stehen,

Z Wasserstoff,

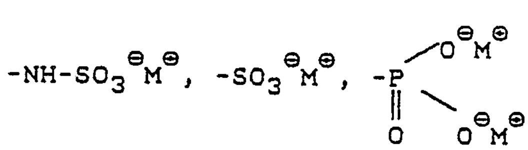

oder $—CH_2—COO^{\ominus}M^{\oplus}$

bedeutet, wobei $M^{\oplus}$ für ein Äquivalent eines Metallions oder für $NH_4^{\oplus}$ steht, das lösliche Sulfonium-, Phosphonium- oder Carboxylsalze bildet und

n eine ganze Zahl von 1 bis 8 bedeutet.

3. Alkoxylierte Aminopolyether gemäß Ansprüchen 1 und 2, dadurch gekennzeichnet, daß sie ein Molekulargewicht von 10 000 bis 150 000 aufweisen.

4. Verfahren zur Herstellung von alkoxylierten Aminopolyethern gemäß Anspruch 1, dadurch gekennzeichnet, daß man an einen Aminopolyalkylenether mit Aminoendgruppen und einem mittleren Molgewicht von 82 bis 30 000 ein $C_2$-$C_{40}$-Alkylenoxid so addiert, daß jeweils mindestens zwei Alkylenoxid-Einheiten mit einer Aminogruppe reagieren, anschließend mit Ethylenoxid oder einem

Gemisch aus $C_2$- bis $C_{40}$-Epoxiden umsetzt und gegebenenfalls anschließend mit Amidosulfonsäuren und Harnstoff, Säurechloriden der Schwefelsäure oder der Phosphorsäure oder Chloressigsäureestern umsetzt und nachfolgend neutralisiert oder verseift.

5. Verfahren gemäß Anspruch 4, dadurch gekennzeichnet, daß man die Umsetzung von einem Amino-polyalkylenether mit einem $C_2$- bis $C_{12}$-Alkylenoxid bei 50 bis 150 °C und in Gegenwart einer Base als Katalysator und danach die Umsetzung mit Ethylenoxid oder einem Gemisch aus $C_2$- bis $C_{40}$-Epoxiden so durchgeführt, daß 50 bis 200 Ethylenoxideinheiten pro Kette hintereinander eingeführt werden.

6. Kohle-Wasser-Aufschlämmungen, enthaltend 0,01-5 Gew.-% alkoxylierte Aminopolyether gemäß Anspruch 1.

7. Kohle-Wasser-Aufschlämmungen gemäß Anspruch 6, enthaltend Kohle in einer Menge von 30 bis 85 Gew.-%.

8. Kohle-Wasser-Aufschlämmungen gemäß Ansprüchen 6 und 7, enthaltend feingemahlene Kohle mit einer mittleren Korngröße von weniger als 300 µm.

9. Kohle-Wasser-Aufschlämmungen gemäß Ansprüchen 6 bis 8, enthaltend zusätzlich organische, mit Wasser mischbare Lösungsmittel, Entschäumer, Stabilisatoren gegen Sedimentation, Biozide, andere grenzflächenaktive Stoffe als die der Formel (I) und/oder andere Brennstoffe als Kohle.

**Claims**

1. Alkoxylated aminopolyethers of the formula (I)

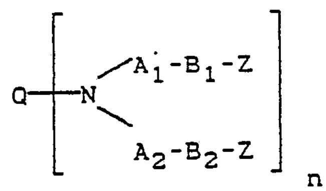

(I)

in which

Q denotes an optionally polyvalent polyalkylene oxide radical which formally derives from an aminopolyether by removal of the terminal amino groups and has an average molecular weight of 82 to 30,000,

$A_1$ and $A_2$ denote identical or different mono- or polyalkylene oxide radicals of the form $(RO)_y$, where each R stands for an alkylene radical having 2 to 40 C atoms, and y stands for an integer from 1 to 200,

$B_1$ and $B_2$ denote identical or different mono- or polyalkylene oxide radicals of the form $(R'O)_z$, where at least 50 % of the R' radicals stand for a $-CH_2-CH_2-$ group, any other R' radicals present each stand for an alkylene radical having 3 to 40 C atoms, and z stands for an integer from 1 to 300,

Z denotes hydrogen,

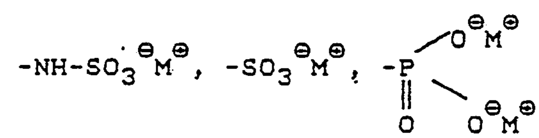

or $-CH_2-COO^{\ominus}M^{\oplus}$,

where $M^{\oplus}$ stands for an equivalent of a metal ion or for $NH_4^{\oplus}$ and

n denotes an integer from 1 to 30.

2. Alkoxylated aminopolyethers according to Claim 1, characterized in that, in the formula (I), independently of one another

Q denotes the radical of a polypropylene oxide, of a polyethylene-polypropylene oxide, of a polytetramethylene oxide or of a polytetramethylene oxide/polydecene oxide which are each started on ethylene glycol, propylene glycol, trimethylolpropane, glycerol, pentaerythritol, ethylenediamine or hexamethylenediamine and each have an average molecular.weight of 82 to 7,000,

$A_1$ and $A_2$ denote identical or different mono- or polyalkylene oxide radicals of the form $(RO)_y$, where each R stands for an alkylene radical having 2 to 12 C atoms, and y stands for an integer from 1 to 80,

$B_1$ and $B_2$ denote identical or different polyalkylene oxide radicals of the formula $(R'O)_z$, where 60 to 100 % of the R' radicals stand for a $-CH_2-CH_2-$ group, any other R' radicals present each stand for an alkylene radical having 3 to 12 C atoms, and z stands for an integer from 50 to 200,

Z denotes hydrogen,

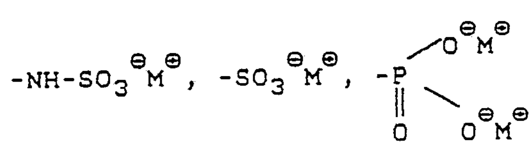

or $—CH_2—COO^{\ominus}M^{\oplus}$,
where $M^{\oplus}$ stands for one equivalent of a metal ion or for $NH_4^{\oplus}$, which forms soluble sulphonium, phosphonium or carboxyl salts and

n denotes an integer from 1 to 8.

3. Alkoxylated aminopolyethers according to claims 1 and 2, characterized in that they have a molecular weight of 10,000 to 150,000.

4. Process for preparing alkoxylated aminopolyethers according to claim 1, characterized in that a $C_2$-$C_{40}$-alkylene oxide is added onto an aminopolyalkylene ether having amino end groups and an average molecular weight of 82 to 30,000 in such a way that in each case at least two alkylene oxide units react with one amino group, the product is then reacted with ethylene oxide or a mixture of $C_2$- to $C_{40}$-epoxides and optionally thereafter with amidosulphuric acids and urea, acid chlorides of sulphuric acid or of phosphoric acid or chloroacetic acid esters, and is subsequently neutralized or hydrolysed.

5. Process according to claim 4, characterized in that the reaction of an aminopolyalkylene ether with a $C_2$- to $C_{12}$-alkylene oxide is carried out at 50 to 150 °C and in the presence of a base as catalyst, and thereafter the reaction with ethylene oxide or a mixture of $C_2$- to $C_{40}$-epoxides is carried out in such a way that 50 to 200 ethylene oxide units per chain are introduced in succession.

6. Coal-water slurries containing 0.01-5 % by weight of alkoxylated aminopolyethers according to claim 1.

7. Coal-water slurries according to claim 6, containing coal in an amount of 30 to 85 % by weight.

8. Coal-water slurries according to claims 6 and 7, containing finely ground coal having an average particle size of less than 300 μm.

9. Coal-water slurries according to claims 6 to 8, containing, in addition, organic water-miscible solvents, defoamers, antisedimentation stabilizers, biocides, surface-active substances other than those of the formula (I) and/or combustibles other than coal.

**Revendications**

1. Aminopolyéthers alcoxylés de formule (I) :

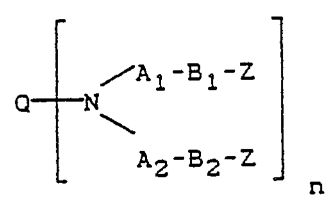

(I)

dans laquelle

Q représente un reste poly(oxyde d'alkylène) éventuellement multivalent, qui, par sa formule, dérive d'un aminopolyéther par enlèvement des groupes aminoterminaux et possède un poids molaire moyen de 82 à 30 000,

$A_1$ et $A_2$ représentent des restes mono- ou poly(oxyde(s) d'alkylène(s)), identiques ou différents, de type $(RO)_y$, où chaque R étant un reste alkylène comportant 2 à 40 atomes de carbone et y étant un nombre entier valant de 1 à 200,

$B_1$ et $B_2$ représentent des restes mono- ou poly(oxyde(s) d'alkylène(s)), identiques ou différents, de type $(R'O)_z$, 50 % des restes R' représentent un groupe $—CH_2—CH_2—$, les autres restes R' éventuellement présents représentant à chaque fois un reste alkylène comportant 3 à 40 atomes de carbone, et z est un nombre entier valant 1 à 300,

Z représente un atome d'hydrogène

$-NH-SO_3^{\ominus}M^{\oplus}$, $-SO_3^{\ominus}M^{\oplus}$, 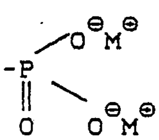

ou $—CH_2—COO^{\ominus}M^{\oplus}$

où $M^{+}$ représente un équivalent d'un ion de métal ou $NH_4^{\oplus}$, et

n est un nombre entier valant 1 à 30.

2. Aminopolyéthers alcoxylés selon la revendication 1, caractérisés en ce que, dans la formule (I) et indépendamment les uns des autres,

Q représente le reste d'un poly(oxyde de propylène), d'un poly(oxyde d'éthylène-oxyde de propylène), d'un poly(oxyde de tétraméthylène) ou d'un poly(oxyde de tétraméthylène)-poly(oxyde de décène)

démarré sur de l'éthylèneglycol, du propylèneglycol, du triméthylolpropane, du glycérol, du pentaérythritol, de l'éthylènediamine ou de l'hexaméthylènediamine, et ayant chaque fois un poids molaire moyen de 82 à 7 000,

$A_1$ et $A_2$ représentent des restes mono- ou poly(oxyde(s) d'alkylène(s)), identiques ou différents, du type $(RO)_y$, chaque R étant un reste alkylène comportant 2 à 12 atomes de carbone et y étant un nombre entier valant 1 à 80,

$B_1$ et $B_2$ représentent des restes poly(oxyde(s) d'alkylène(s)), identiques ou différents, du type $(R'O)_z$ 60 à 100 % des restes R' représentant un groupe $—CH_2—CH_2—$, les autres restes R' éventuellement présents représentant chacun un reste alkylène ayant 3 à 12 atomes de carbone, et z est un nombre entier valant 50 à 200,

Z représente un atome d'hydrogène

$-NH-SO_3^{\ominus}M^{\oplus}$, $-SO_3^{\ominus}M^{\oplus}$, 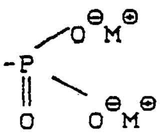

ou $—CH_2—COO^{\ominus}M^{\oplus}$

$M^{\oplus}$ représente un équivalent d'un ion de métal ou $NH_4$, qui forme des sels de sulfonium, de phosphonium ou de carboxyle soluble, et

n est un nombre entier valant 1 à 8.

3. Aminopolyéthers alcoxylés selon les revendications 1 et 2, caractérisés en ce qu'ils présentent un poids moléculaire de 10 000 à 150 000.

4. Procédé pour préparer des aminopolyéthers alcoxylés selon la revendication 1, caractérisé en ce qu'on ajoute, à un aminopoly(éther-oxyde d'alkylène) comportant des groupes amino terminaux et ayant un poids molaire moyen de 82 à 30 000, un oxyde d'alkylène en $C_2$ à $C_{40}$, en ce qu'on fait chaque fois réagir au moins deux motifs oxyde d'alkylène avec un groupe amino, puis l'on fait réagir avec l'oxyde d'éthylène ou avec un mélange d'époxydes en $C_2$ à $C_{40}$ et éventuellement ensuite avec des acides amidosulfoniques et de l'urée, des chlorures d'acide dérivant de l'acide sulfurique ou de l'acide phosphorique ou des esters d'un acide chloracétique, puis l'on neutralise ou saponifie.

5. Procédé selon la revendication 4, caractérisé en ce qu'on conduit la réaction d'un aminopoly(éther-oxyde d'alkylène) avec un oxyde d'alkylène en $C_2$ à $C_{12}$ en opérant à 50 jusqu'à 150 °C et en présence d'une base comme catalyseur, puis l'on conduit la réaction avec l'oxyde d'éthylène ou avec un mélange d'époxydes en $C_2$ à $C_{40}$, de façon à introduire successivement 50 à 200 motifs oxyde d'éthylène par chaîne.

6. Suspensions de charbon dans l'eau, contenant 0,01 à 5 % en poids d'aminopolyéthers-oxydes alcoxylés selon la revendication 1.

7. Suspensions de charbon dans l'eau selon la revendication 6, contenant du charbon présent en une quantité de 30 à 85 % en poids.

8. Suspensions de charbon dans l'eau selon les revendications 6 et 7, contenant du charbon finement moulé dont la grosseur moyenne des grains est inférieure à 300 µm.

9. Suspensions de charbon dans l'eau selon les revendications 6 à 8, contenant en outre des solvants organiques miscibles à l'eau, des agents de démoussage, des stabilisants à l'encontre d'une sédimentation, des biocides, d'autres substances tensioactives que celles répondant à la formule (I) et/ou d'autres combustibles que du charbon.